# EUROPÄISCHE PATENTSCHRIFT

(11) **EP 1 492 701 B1**
(45) Veröffentlichungstag und Bekanntmachung des Hinweises auf die Patenterteilung: **23.11.2005**
(21) Anmeldenummer: 03718743.2
(22) Anmeldetag: 09.04.2003
(51) Int. Cl.: B64C 1/14

(54) **FLUGZEUGFENSTEREINFASSUNG MIT INDIREKTER KÜNSTLICHER BELEUCHTUNGSMÖGLICHKEIT**
AIRCRAFT WINDOW CASE THAT CAN BE ARTIFICIALLY ILLUMINATED IN AN INDIRECT MANNER
ENCADREMENT DE FENETRE D'AVION AVEC POSSIBILITE D'ECLAIRAGE ARTIFICIEL INDIRECT

(30) Priorität: 09.04.2002 DE 10215559
(43) Veröffentlichungstag der Anmeldung: 05.01.2005
(73) Patentinhaber: Aircabin GmbH, 88471 Laupheim (DE)
(72) Erfinder: JUGOVIC, Natalie, 89231 Neu-Ulm (DE); KÄMMERER, Andreas, 89073 Ulm (DE); LANG, Oliver, 89231 Neu Ulm (DE); FIEDLER, Silvan, 89081 Ulm (DE); KRAUS, Axel, 67346 Speyer (DE); GOTSCHY, Robert, 89165 Dietenheim (DE)
(74) Vertreter: Beyer, Andreas
(86) Internationale Anmeldenummer: PCT/EP2003/003689
(87) Internationale Veröffentlichungsnummer: WO 2003/084810

(56) Entgegenhaltungen:
- EP-A- 1 249 391
- DE-C- 19 529 737
- DE-U- 20 018 808

## Beschreibung

Die Erfindung betrifft eine Flugzeugfenstereinfassung mit indirekter künstlicher Beleuchtungsmöglichkeit. Ein solches Fenster ist beispielsweise aus der deutschen Patentschrift DE-C-19 529 737 bekannt.

In Verkehrsflugzeugen ist man heute bemüht, den Passagieren, insbesondere den Passagieren der Business-Class und First-Class, mehr und mehr Komfort zu bieten. Dazu gehört auch eine individuelle Ausstattung des Flugzeuginnenraums, die neben der Berücksichtigung allerlei praktischer Erwägungen dafür sorgen soll, dass ein Passagier sich wohlfühlt.

Der Erfindung liegt die Aufgabe zugrunde, den Grad des Wohlbefindens eines Passagiers an Bord eines Verkehrsflugzeuges insbesondere bei Dunkelheit zu steigern.

Hierzu schlägt die Erfindung eine Flugzeugfenstereinfassung mit indirekter künstlicher Beleuchtungsmöglichkeit vor, die einen Anschlusstrichter zur Anbindung an die Innenseite eines Flugzeugfensters, eine die Fenstereinfassung zum Flugzeuginnenraum abschließende Blende, ein hohlzylindrisches Übergangselement aus transluzentem Material zur Überbrückung einer Distanz zwischen dem Anschlusstrichter und der Blende, sowie eine Beleuchtungseinrichtung aufweist, die Licht auf die Außenseite des Übergangselementes abstrahlt. Auf diese Weise ist eine Vorrichtung geschaffen, die einen Flugzeugpassagier auch dann, wenn draußen Dunkelheit herrscht, von dem Fenster aus mit Ucht versorgt. Durch das hohlzylindrische Übergangselement aus transluzenbem Material, das mittels der Beleuchtungseinrichtung hinterleuchtet ist, ist die lichtabgebende Fläche relativ groß und das Licht ist blendfrei. Ferner erzeugt das hinterleuchtete hohlzylindrische. Übergangselement den Eindruck einer räumlichen Tiefe, der insbesondere bei dem am Fenster sitzenden Flugzeugpassagier zu einem subjektiv besseren Raumgefühl beiträgt. Es versteht sich, dass die Hinterleuchtung nach Wunsch des Flugzeugpassagiers an- und abschaltbar ist.

Vorzugsweise ist die Intensität der Hinterleuchtung vom Passagier steuerbar, so dass er beispielsweise eine zum Lesen ausreichende Beleuchtungshelligkeit einstellen kann und andererseits in Ruhephasen eine nicht störende, lediglich die Umgebung etwas erhellende Beleuchtung wählen kann.

Als transluzentes Material für das hohlzylindrische Übergangselement ist prinzipiell jedes transluzente Material geeignet. Das transluzente Material kann darüber hinaus auch transparent sein. Vorzugsweise wird jedoch ein Material verwendet, welches das von der Beleuchtungseinrichtung stammende Licht diffus streut und vom Passagier aus keine Sicht auf hinter dem hohlzylindrischen Übergangselement angeordnete Teile erlaubt, beispielsweise auf die Beleuchtungseinrichtung selbst.

Gemäß einer bevorzugten Ausgestaltung kann die Beleuchtungseinrichtung Licht mit unterschiedlicher Farbe abgeben, und die von der Beleuchtungseinrichtung abgegebene Lichtfarbe ist vorzugsweise vom Benutzer wählbar. So kann beispielsweise vorgesehen sein, dass der Benutzer die Uchtfarbe tageslichtähnlich einstellen kann, wenn er bei Dunkelheit lesen möchte, und dass die Lichtfarbe bei abnehmender Intensität zunehmend wärmer wird, was als Hintergrundbeleuchtung von vielen Personen angenehm empfunden wird. Alternativ oder zusätzlich kann auch vorgesehen sein, dass der Benutzer die Lichtfarbe entsprechend seiner momentanen persönlichen Stimmung unabhängig von der Intensität der Beleuchtung selbst wählen kann, beispielsweise mehr rötlich, mehr bläulich, mehr grünlich oder mehr gelblich.

Gemäß einer Weiterbildung der vorliegenden Erfindung ist nicht nur das hohlzylindrische Übergangselement, sondern auch die die Fenstereinfassung zum Flugzeuginnenraum abschließende Blende aus transluzentem Material gefertigt. Auf diese Weise wird noch stärker der Eindruck vermittelt, Licht käme wie zur Tageszeit durch das Fenster herein. Die Qualität der Beleuchtung zu Lesezwecken ist ebenfalls verbessert, da nun auch dem Passagier direkt zugewandte Flächen der Flugzeugfenstereinfassung Ucht abstrahlen.

In einer bevorzugten Ausführungsform der erfindungsgemäßen Flugzeugfenstereinfassung wird als transluzentes Material für das hohlzylindrische Übergangselement und/oder die Blende satiniertes Kunststoff Acrylglas eingesetzt. Dieses hat die oben erwähnten, gewünschten Eigenschaften und lässt sich problemlos in jeder gewünschten Form herstellen.

In einer Ausführungsform der erfindungsgemäßen Flugzeugfenstereinfassung sind das hohlzylindrische Übergangselement und der für die Anbindung an das eigentliche Fenster sorgende Anschlusstrichter einstückig miteinander verbunden. Falls gewünscht, kann auch der Anschlusstrichter aus transluzentem Material bestehen und hinterleuchtet sein, unabhängig davon, ob er mit dem hohlzylindrischen Übergangselement einstückig verbunden ist oder nicht.

Bei Ausführungsformen der erfindungsgemäßen Flugzeugfenstereinfassung, bei denen der Anschlusstrichter und das hohlzylindrische Übergangselement nicht einstückig miteinander verbunden sind, kann zwischen dem Anschlusstrichter und dem hohlzylindrischen Übergangselement eine physikalische oder mechanische Fensterabdunklungseinrichtung angeordnet sein, beispielsweise ein Fensterrollo.

Vorzugsweise ist die Fensterabdunklungseinrichtung eine sogenannte SPD(suspended particle device)-Vorrichtung. Sie weist eine aktive Schicht aus nadelförmigen Dipolen auf, welche in einer organischen Flüssigkeit oder einem organischen Gel "schwebend" eingelagert sind. Diese Schicht ist flächig mit zwei Elektroden beschichtet oder zwischen zwei Elektroden eingefüllt und lässt sich in Form einer Folie herstellen. Eine solche Vorrichtung überdeckt die freie Fensteröffnung und lässt sich in ihrer Lichtdurchlässigkeit durch Ansteuern mittels Strom so regeln, dass von einer maximalen Lichtdurchlässigkeit bis zur völligen Lichtabsperrung jeder Zwischenzustand einstellbar ist. Ein am Fenster sitzender Flugzeugpassagier kann somit eine durch das Fenster einfallende, stark blendende Sonnenstrahlung bis zum gewünschten Grad abmildern. Die erfindungsgemäße Flugzeugfenstereinfassung gestattet es darüber hinaus dann sogar, mittels ihrer indirekten künstlichen Beleuchtungsmöglichkeit künstliches Ucht dem durch das Fenster einfallenden Tageslicht beizumischen, um so unabhängig vom einfallenden, möglicherweise blendenden Tageslicht eine gewünschte Beleuchtung einzustellen. Besonders vorteilhaft ist dies dann, wenn die künstliche Hinterleuchtung der erfindungsgemäßen Flugzeugfenstereinfassung tageslichtähnlichen Charakter hat.

Die Beleuchtungseinrichtung der erfindungsgemäßen Flugzeugfenstereinfassung umgibt das Übergangselement vorzugsweise ringförmig. Damit wird die Erzielung einer gleichmäßigen Hinterleuchtung an allen Stellen des Übergangselementes erteichtert.

Eine das hohlzylindrische Übergangselement ringförmig umschließende Beleuchtungseinrichtung kann auf verschiedene Weise realisiert werden. So können beispielsweise mehrere Uchtquellen im Abstand voneinander rund um das Übergangselement herum angeordnet sein. Alternativ kann die Lichtquelle eine ringförmige Neonröhre sein. Gemäß einer noch anderen Ausgestaltung kann das Licht einer einzigen Lichtquelle mittels Lichtleitertechnik zu verschiedenen Stellen rund um das Übergangselement herum geleitet werden.

Zur Änderung der Farbe des von der Beleuchtungseinrichtung abgegebenen Lichtes können entweder mehrere Lichtquellen vorgesehen sein, deren abgegebenes Licht zum gewünschten Farbton gemischt wird, oder es wird eine Lichtquelle verwendet, deren Farbe sich durch Ansteuerung ändern lässt.

Als Lichtquelle(n) für die Beleuchtungseinrichtung der erfindungsgemäßen Flugzeugfenstereinfassung sind alle bekannten Lichtquellen geeignet, beispielsweise Glühbirnen, Halogenlampen, Neonröhren und auch Leuchtdioden.

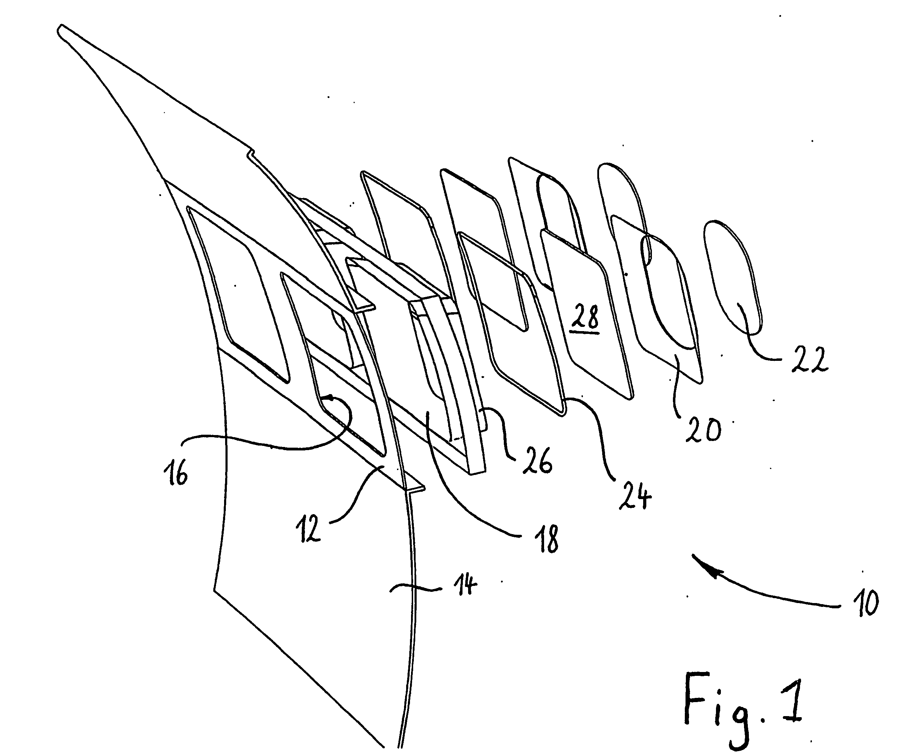

Zum besseren Verständnis der Erfindung wird im folgenden ein bevorzugtes Ausführungsbeispiel einer erfindungsgemäßen Flugzeugfenstereinfassung anhand der beigefügten schematischen einzigen Figur näher erläutert, die eine räumliche Ansicht der Flugzeugfenstereinfassung in auseinandergezogener Darstellung zeigt.

In der einzigen Figur ist eine allgemein mit 10 bezeichnete Flugzeugfenstereinfassung in auseinandergezogener Darstellung wiedergegeben, die vom Flugzeuginnenraum gesehen mit einer die Fenstereinfassung 10 zum Flugzeuginnenraum abschließenden Blende 12 beginnt, die hier in eine Seitenverkleidung 14 einer nicht weiter dargestellten Inneneinrichtung des Flugzeugs integriert ist. Die Blende 12 hat eine im vorliegenden Fall annähernd quadratische Fensteröffnung 16.

An die Blende 12 schließt sich ein hohlzylindrisches Übergangselement 18 an, welches den Abstand zwischen der Blende 12 und einem Anschlusstrichter 20 überbrückt, der einen formschönen Übergang zur eigentlichen, im wesentlichen ovalen Fensterscheibe 22 herstellt.

Das hohlzylindrische Übergangselement 18 ist im gezeigten Ausführungsbeispiel ebenso wie die Blende 12 aus transluzentem, satiniertem Acrylglas hergestellt. Das Übergangselement 18 hat hier einen annähemd quadratischen Querschnitt mit einer inneren Öffnung, die die Fensteröffnung 16 der Blende 12 fortsetzt.

Eine ringförmige Beleuchtungseinrichtung 24 umgibt das Übergangselement 18 auf seiner Außenseite und strahlt wahlweise Licht auf die Außenseite 26 des Übergangselementes 18. Dadurch wird die gesamte Innenfläche des Übergangselementes 18 und im gezeigten Ausführungsbeispiel auch die einem Flugzeugpassagier zugewandte Außenseite der Blende 12 gleichmäßig erhellt. Die Beleuchtungseinrichtung 24 kann beispielsweise eine in die gewünschte Form gebrachte Neonröhre sein, alternativ können jedoch auch mehrere mehr oder weniger punktförmige Lichtquellen eingesetzt werden, die um den Umfang des Übergangselementes 18 herum verteilt angeordnet sind.

Im gezeigten Ausführungsbeispiel ist zwischen dem Übergangselement 18 und dem Anschlusstrichter 20 eine scheibenförmige, sogenannte SPD(suspended particle device)-Vorrichtung 28 angeordnet. Mit ihr lässt sich die durch die Fensterscheibe 22 einfallende Lichtintensität beeinflussen, indem der Lichttransmissionsgrad der SPD-Vorrichtung auf das gewünschte Maß eingestellt wird. Die Funktionsweise einer SPD-Vorrichtung ist im einleitenden Teil der Beschreibung grundsätzlich erläutert worden, so dass hier nicht nochmals darauf eingegangen zu werden braucht. Alternativ können statt der SPD-Vorrichtung 28 auch andere physikalische oder mechanische Verdunklungseinrichtungen zum Einsatz kommen, beispielsweise ein Fensterrollo.

Obwohl im gezeigten Ausführungsbeispiel die Fensteröffnung 16 und die sich daran anschließende innere Öffnung des Übergangselementes 18 nahezu quadratisch sind, versteht es sich, dass jede gewünschte andere Form gewählt werden kann, beispielsweise rund, oval, mehreckig, etc., ohne dass die Funktion der Flugzeugfenstereinfassung 10 hierdurch beeinträchtigt wird.

In der das Ausführungsbeispiel illustrierenden Figur sind zwei Flugzeugfenstereinfassungen 10 nebeneinander dargestellt. Es versteht sich, dass sowohl mehrere Flugzeugfenstereinfassungen 10 nebeneinander angeordnet sein können, wobei die Blende 12 dann so ausgeführt sein kann, dass sie mehrere Fensteröffnungen 16 aufweist, oder dass lediglich eine einzige Flugzeugfenstereinfassung 10 vorhanden sein kann.

## Patentansprüche

1. Flugzeugfenstereinfassung (10) mit indirekter künstlicher Beleuchtungsmöglichkeit, mit,
- einem Anschlusstrichter (20) zur Anbindung an die Innenseite eines Flugzeugfensters (22),
- einer die Fenstereinfassung zum Flugzeuginnenraum abschließenden Blende (12),
- einem hohlzylindrischen Übergangselement (18) aus transluzentem Material zur Überbrückung einer Distanz zwischen dem Anschlusstrichter (20) und der Blende (12), und
- einer Beleuchtungseinrichtung (24), die Licht auf die Außenseite des Übergangselementes (18) abstrahlt.

2. Flugzeugfenstereinfassung nach Anspruch 1,
**dadurch gekennzeichnet, dass** die Beleuchtungseinrichtung (24) das Übergangselement (18) ringförmig umgibt.

3. Flugzeugfenstereinfassung nach Anspruch 1 oder 2,
**dadurch gekennzeichnet, dass** die Beleuchtungseinrichtung (24) mehrere Lichtquellen aufweist.

4. Flugzeugfenstereinfassung nach einem der vorhergehenden Ansprüche,
**dadurch gekennzeichnet, dass** die Beleuchtungseinrichtung (24) Licht mit unterschiedlicher Farbe abgeben kann.

5. Flugzeugfenstereinfassung nach Anspruch 4,
**dadurch gekennzeichnet, dass** die von der Beleuchtungseinrichtung (24) abgegebene Lichtfarbe von einem Benutzer wählbar ist.

6. Flugzeugfenstereinfassung nach einem der vorhergehenden Ansprüche,
**dadurch gekennzeichnet, dass** die Lichtquelle(n) der Beleuchtungseinrichtung (24) Leuchtdioden sind.

7. Flugzeugfenstereinfassung nach einem der Ansprüche 1 bis 5,
**dadurch gekennzeichnet, dass** die Beleuchtungseinrichtung (24) eine insbesondere ringförmige Neonröhre aufweist.

8. Flugzeugfenstereinfassung nach einem der vorhergehenden Ansprüche,
**dadurch gekennzeichnet, dass** auch die Blende (12) aus transluzentem Material besteht.

9. Flugzeugfenstereinfassung nach einem der vorhergehenden Ansprüche,
**dadurch gekennzeichnet, dass** das hohlzylindrische Übergangselement (18) und der Anschlusstrichter (20) einstückig miteinander verbunden sind.

10. Flugzeugfenstereinfassung nach einem der Ansprüche 1 bis 8,
**dadurch gekennzeichnet, dass** zwischen dem Anschlusstrichter (20) und dem hohlzylindrischen Übergangselement (18) eine mechanische oder physikalische Fensterabdunklungseinrichtung angeordnet ist.

11. Flugzeugfenstereinfassung nach Anspruch 10,
**dadurch gekennzeichnet, dass** die Fensterabdunklungseinrichtung eine SPD-Vorrichtung (28) ist.

12. Flugzeugfenstereinfassung nach einem der vorhergehenden Ansprüche,
**dadurch gekennzeichnet, dass** das transluzente Material des hohlzylindrischen Übergangselementes (18) und/oder der Blende (12) satiniertes Acrylglas ist.

## Claims

1. Aircraft window case (10) that can be artificially illuminated in an indirect manner, comprising
- a connecting cone (20) for connection to the inner face of an aircraft window (22);
- a panel (12) closing off the window case from the aircraft interior;
- a hollow-cylindrical transition element (18) made of translucent material for spanning a distance between the connecting cone (20) and the panel (12), and
- an illumination device (24) which radiates light on to the outer face of the transition element (18).

2. Aircraft window case according to claim 1,
**characterised in that** the illumination device (24) surrounds the transition element (18) in an annular manner.

3. Aircraft window case according to claim 1 or 2,
**characterised in that** the illumination device (24) comprises a plurality of light sources.

4. Aircraft window case according to one of the preceding claims,
**characterised in that** the illumination device (24) can emit light of different colours.

5. Aircraft window case according to claim 4,
**characterised in that** the light colour emitted by the illumination device (24) is selectable by a user.

6. Aircraft window case according to one of the preceding claims,
**characterised in that** the light source(s) of the illumination device (24) are LEDs.

7. Aircraft window case according to one of claims 1 to 5,
**characterised in that** the illumination device (24) includes a neon tube, which is preferably annular.

8. Aircraft window case according to one of the preceding claims,
**characterised in that** also the panel (12) is made of translucent material.

9. Aircraft window case according to one of the preceding claims,
**characterised in that** the hollow-cylindrical transition element (18) and the connecting cone (20) are connected together in one piece.

10. Aircraft window case according to one of claims 1 to 8,
**characterised in that** a mechanical or physical window blackout device is arranged between the connecting cone (20) and the hollow-cylindrical transition element (18).

11. Aircraft window case according to claim 10,
**characterised in that** the window blackout device is an SPD (28).

12. Aircraft window case according to one of the preceding claims,
**characterised in that** the translucent material of the hollow-cylindrical transition element (18) and/or of the panel (12) is satinised acrylic glass.

## Revendications

1. Encadrement de fenêtre d'avion (10) avec possibilité d'éclairage artificiel indirect, comprenant
- un cône de raccordement (20) destiné au raccordement dudit encadrement à la face intérieure d'une fenêtre d'avion (22),
- un écran (12) fermant ledit encadrement par rapport à l'intérieur de l'avion,
- un élément de transition (18) cylindrique creux composé d'un matériau translucide, destiné à combler l'espace séparant le cône de raccordement (20) et l'écran (12) et
- un dispositif d'éclairage (24) diffusant de la lumière sur le côté extérieur de l'élément de transition (18).

2. Encadrement de fenêtre d'avion selon la revendication 1,
**caractérisé en ce que** le dispositif d'éclairage (24) fait tout le tour de l'élément de transition (18).

3. Encadrement de fenêtre d'avion selon la revendication 1 ou 2,
**caractérisé en ce que** le dispositif d'éclairage (24) présente plusieurs sources lumineuses.

4. Encadrement de fenêtre d'avion selon l'une des revendications précédentes,
**caractérisé en ce que** le dispositif d'éclairage (24) peut émettre de la lumière de couleur différente.

5. Encadrement de fenêtre d'avion selon la revendication 4,
**caractérisé en ce que** la couleur de la lumière diffusée par le dispositif d'éclairage (24) est laissée au choix d'un usager.

6. Encadrement de fenêtre d'avion selon l'une des revendications précédentes,
**caractérisé en ce que** la(les) source(s) lumineuse(s) du dispositif d'éclairage (24) sont des diodes luminescentes.

7. Encadrement de fenêtre d'avion selon l'une des revendications 1 à 5,
**caractérisé en ce que** le dispositif d'éclairage (24) présente un tube néon en particulier annulaire.

8. Encadrement de fenêtre d'avion selon l'une des revendications précédentes,
**caractérisé en ce que** l'écran (12) se compose lui aussi d'un matériau translucide.

9. Encadrement de fenêtre d'avion selon l'une des revendications précédentes,
**caractérisé en ce que** l'élément de transition (18) cylindrique creux et le cône de raccordement (20) sont réalisés d'un seul tenant.

10. Encadrement de fenêtre d'avion selon la revendication 1 ou 2,**caractérisé en ce qu'**un dispositif d'obscurcissement mécanique ou physique de fenêtre est disposé entre le cône de raccordement (20) et l'élément de transition (18).

11. Encadrement de fenêtre d'avion selon la revendication 10,
**caractérisé en ce que** le dispositif d'obscurcissement de fenêtre est un dispositif SPD (28).

12. Encadrement de fenêtre d'avion selon l'une des revendications précédentes,
**caractérisé en ce que** le matériau translucide de l'élément de transition (18) cylindrique creux et/ou de l'écran (12) est du verre acrylique satiné.
